# EUROPÄISCHE PATENTSCHRIFT

(11) **EP 3 674 066 B1**
(45) Veröffentlichungstag und Bekanntmachung des Hinweises auf die Patenterteilung: **30.04.2025**
(21) Anmeldenummer: 19218750.8
(22) Anmeldetag: 20.12.2019
(51) Int. Cl.: B29C 65/50, B29C 65/00, B29C 65/16, B29C 65/36, B64C 1/06, B29L 31/30

(54) **FÜGEVERFAHREN SOWIE BEARBEITUNGSKOPF UND FERTIGUNGSMASCHINE ZUM DURCHFÜHREN DES VERFAHRENS**
JOINING METHOD AND MACHINING HEAD AND MANUFACTURING MACHINE FOR CARRYING OUT THE METHOD
PROCÉDÉ D'ASSEMBLAGE, AINSI QUE TÊTE DE TRAITEMENT ET MACHINE À USINER PERMETTANT DE METTRE EN UVRE LEDIT PROCÉDÉ

(30) Priorität: 28.12.2018 DE 102018133676
(43) Veröffentlichungstag der Anmeldung: 01.07.2020
(73) Patentinhaber: Airbus Operations GmbH, 21129 Hamburg (DE); Fraunhofer-Gesellschaft zur Förderung der angewandten Forschung e.V., 80686 München (DE)
(72) Erfinder: Heltsch, Norbert, 21129 Hamburg (DE); Standfuß, Jens, 01796 Pirna (DE); Klotzbach, Annett, 01326 Dresden (DE)
(74) Vertreter: KASTEL Patentanwälte PartG mbB

(56) Entgegenhaltungen:
- WO-A1-2014/029969
- WO-A1-2015/164954
- WO-A2-2004/106038
- JP-A- 2011 079 289
- US-B1- 10 046 511

## Beschreibung

Die Erfindung betrifft ein Fügeverfahren zum Verbinden von wenigstens zwei thermoplastischen Werkstücken. Ferner betrifft die Erfindung einen Bearbeitungskopf und eine Fertigungsmaschine zum Durchführen des Verfahrens.

Die Anwendung von Lasertechnologie zum Fügen thermoplastischer Teile ist allgemein bekannt und wird bereits seit einiger Zeit auf industrieller Skala angewendet, einschließlich Induktionsschweißen, Transmissionslaserschweißen oder insitu fortgeschrittener Faserlegetechnik (engl. advanced fibre placement technology, kurz: AFPT). Ein Beispiel ist aus der DE 10 2015 110 193 A1 bekannt. Neben Laserschweißtechnologie, ist darin ein Laserverdampfungsprozess offenbart, um Schäftungsverbindungen als strukturell effiziente Schnittstellenfläche bereitzustellen.

Transmissionslaserschweißen erfordert grundsätzlich, dass wenigstens eines der Fügestücke mehrheitlich transparent ist, so dass der Laser das Teil bis hinunter zu den Fügeflächen durchdringen kann. Eine Diffusion des Lasers und Gesamterwärmung der Verbindung ist kaum vermeidbar und kann die Steuerbarkeit und Geschwindigkeit des Fügeprozesses erheblich beeinflussen. Neben dem Erfordernis der Materialtransparenz, ist diese Technologie auch durch die Dicke der Fügeteile eingeschränkt.

Induktionsschweißen für wie Transmissionslaserschweißen zu einer Gesamterwärmung mit Einschränkungen für die Prozesssteuerung, verursacht durch die Energieeinkopplung in Kohlefasern und/oder Kupfergeflecht zum Blitzschutz.

WO 2004 / 106 038 A1 offenbart ein Verbindungsverfahren für Rohre aus thermoplastischem Material.

US 10 046 511 B1 offenbart eine Faserlegevorrichtung bei der auf die Faserstreifen wirkende Drehmomente verringert werden.

WO 2015 / 164 954 A1 offenbart einen 3D-Drucker der ein erstes Kunststoffmaterial und ein faserverstärktes zweites Kunststoffmaterial verarbeiten kann.

WO 2014 / 029 969 A1 offenbart eine Faserlegevorrichtung bei der eine Blitzlampe zum Verbinden der Faserschichten verwendet wird.

JP 2011 / 0 179 289 A offenbart eine Fügeverfahren, bei dem Matrixmaterial durch Laserstrahlung entfernt wird.

Der Erfindung liegt die Aufgabe zugrunde, Maßnahmen vorzuschlagen, die einen verbesserten Prozessablauf beim Fügen von Verbundbauteilen ermöglichen.

Die Aufgabe wird durch den Gegenstand der unabhängigen Ansprüche gelöst. Bevorzugte Weiterbildungen sind Gegenstand der abhängigen Ansprüche.

Die Erfindung schafft ein Fügeverfahren zum Verbinden von wenigstens zwei thermoplastischen Werkstücken, die insbesondere faserverstärkten Kunststoff enthalten oder daraus gefertigt sind, mit den Schritten:
a) Schäften eines Randbereichs an wenigstens einem der Werkstücke, um wenigstens einen Schäftungsbereich zu erzeugen, wobei der Schäftungsbereich durch eine Mehrzahl von Werkstücklagen des Werkstücks stufig ausgebildet wird, wobei der Schäftungsbereich vorbehandelt wird, indem Fasern des Werkstücks freigelegt werden und/oder indem das Werkstück mit einer mikrostrukturierten Funktionsschicht beschichtet wird,
b) Positionieren der Werkstücke relativ zueinander derart, dass der Schäftungsbereich des einen Werkstücks und das andere Werkstück einen Nahtbereich begrenzen, wobei die Werkstücke derart positioniert werden, dass ein Fertigungsspalt zwischen den Werkstücken oder den untersten Werkstücklagen der Werkstücke gebildet wird,
c) Einlegen eines Verbindungskörpers in den Nahtbereich und Erwärmen des im Nahtbereich befindlichen Teils des Verbindungskörpers mittels lokalem Wärmeeintrag zum Bilden einer stoffschlüssigen Verbindung zwischen jedem Werkstück und dem Verbindungskörper, wobei beim Einlegen einer ersten Verbindungskörperlage der Verbindungskörper mittels einer Anpresseinrichtung, die den Verbindungskörper erfasst, und einer Gegenanpresseinrichtung, die das Werkstück erfasst, angepresst wird, wobei die Gegenanpresseinrichtung sich unterhalb und zwischen den Werkstücken erstreckt.

Es ist bevorzugt, dass in Schritt a) das Schäften durch entsprechendes Faserlegen, Materialabtrag, Laserablation, Maschinenbearbeitung und/oder Fräsen erfolgt.

Es ist bevorzugt, dass in Schritt a) der Schäftungsbereich vorbehandelt wird, indem Fasern des Werkstücks mittels Laseroberflächenbehandlung freigelegt werden.

Es ist bevorzugt, dass in Schritt a) der Schäftungsbereich vorbehandelt wird, indem das Werkstück mit einer mikrostrukturierten Funktionsschicht plasmabeschichtet wird.

Es ist bevorzugt, dass in Schritt b) die Werkstücke derart positioniert werden, dass die Breite des Nahtbereichs in Richtung senkrecht zu den Werkstücklagen zunimmt oder stufenweise zunimmt.

Es ist bevorzugt, dass in Schritt b) der Abstand entlang der Parallelrichtung zu den Werkstücklagen zwischen den Werkstücken in Richtung senkrecht zu den Werkstücklagen betrachtet zunimmt oder stufenweise zunimmt.

Es ist bevorzugt, dass in Schritt b) der Abstand entlang der Parallelrichtung zu den Werkstücklagen zwischen den untersten Werkstücklagen der geringste Abstand zwischen den Werkstücken ist.

Es ist bevorzugt, dass in Schritt b) der Fertigungsspalt der geringste Abstand zwischen den Werkstücken entlang der Parallelrichtung zu den Werkstücklagen ist.

Es ist bevorzugt, dass in Schritt c) der Verbindungskörper mittels einer Anpresseinrichtung, insbesondere einer Anpressrolle, gegen das Werkstück gepresst wird, wobei vorzugsweise die Anpresseinrichtung den Verbindungskörper auf einer dem Werkstück abgewandten Verbindungskörperbreitseite erfasst.

Es ist bevorzugt, dass in Schritt c) der Verbindungskörper an einer, insbesondere einer einzelnen, Verbindungskörperbreitseite erwärmt wird.

Es ist bevorzugt, dass in Schritt c) eine Verbindungskörperbreitseite der nächsten unteren Werkstücklage zugewandt ist.

Es ist bevorzugt, dass in Schritt c) der Verbindungskörper an wenigstens einer, insbesondere beiden, Verbindungskörperschmalseiten erwärmt wird.

Es ist bevorzugt, dass in Schritt c) die Verbindungskörperschmalseite in Querrichtung des Nahtbereichs der nächsten Werkstücklagenschmalseite zugewandt ist.

Es ist bevorzugt, dass in Schritt c) eine Mehrzahl von Verbindungskörpern lagenweise eingelegt und erwärmt werden, um eine mit der jeweiligen Werkstücklage stoffschlüssig verbundene Verbindungskörperlage zu erzeugen.

Es ist bevorzugt, dass in Schritt c) beim Einlegen einer ersten Verbindungskörperlage der Verbindungskörper mittels einer Gegenanpresseinrichtung, die eine unterste Werkstücklage erfasst, angepresst wird.

Es ist bevorzugt, dass die Gegenanpresseinrichtung ein Schwert aufweist, das zwischen die Werkstücke eingeführt wird, wenn das Anpressen erfolgt.

Es ist bevorzugt, dass die Gegenanpresseinrichtung eine Gegenanpressrolle aufweist, die gegenüber der Anpresseinrichtung, insbesondere an einem Endbereich des Schwerts, angeordnet ist.

Es ist bevorzugt, dass in Schritt c) beim Einlegen einer zweiten oder weiteren Verbindungskörperlage den Verbindungskörper lediglich mittels einer Anpresseinrichtung, die den Verbindungskörper erfasst, gegen das Werkstück, insbesondere eine der Verbindungskörperlage entsprechende Werkstücklage, gepresst wird.

Es ist bevorzugt, dass in Schritt c) das Erwärmen durch Scannen eines Laserstrahls über den Nahtbereich erfolgt.

Es ist bevorzugt, dass, insbesondere in Schritt c), der Fertigungsspalt beim Einlegen und Erwärmen einer ersten Verbindungskörperlage mittels Füllstoff verfüllt wird.

Es ist bevorzugt, dass der Verbindungskörper als flexibles Verbindungsband ausgebildet ist.

Es ist bevorzugt, dass der Verbindungskörper einen höchstens teilweise ausgehärteten faserverstärkten Kunststoff enthält oder daraus gefertigt ist.

Es ist bevorzugt, dass der Verbindungskörper ein Metallblech enthält oder daraus gefertigt ist.

Es ist bevorzugt, dass der Verbindungskörper eine Faser-Metall-Lage enthält oder daraus gefertigt ist.

Es ist bevorzugt, dass der Verbindungskörper einen mehrschichtigen faserverstärkten Kunststoff enthält oder daraus gefertigt ist.

Es ist bevorzugt, dass der faserverstärkte Kunststoff ein kohlefaserverstärkter Kunststoff und/oder ein glasfaserverstärkter Kunststoff ist.

Die Erfindung schafft einen Bearbeitungskopf für eine Fertigungsmaschine, die zum Fertigen einer Rumpfkomponente für ein Rumpfsegment eines Luftfahrzeugs oder eines Rumpfsegments für ein Luftfahrzeug ausgebildet ist, wobei der Bearbeitungskopf zum Verbinden von wenigstens zwei Werkstücken, die faserverstärkten Kunststoff enthalten oder daraus gefertigt sind, ausgebildet ist und eine Schäftungseinrichtung, die zum Schäften eines Randbereichs an wenigstens einem der Werkstücke ausgebildet ist, um wenigstens einen Schäftungsbereich zu erzeugen, eine Einlegeeinrichtung, die zum Einlegen eines Verbindungskörpers in einen Nahtbereich zwischen den Werkstücken ausgebildet ist, eine Aktivierungseinrichtung, die zum Erwärmen des im Nahtbereich befindlichen Teils des Verbindungskörpers mittels lokalem Wärmeeintrag ausgebildet ist, und eine Anpresseinrichtung umfasst, die zum Anpressen des erwärmten Verbindungskörpers an das Werkstück ausgebildet, um eine stoffschlüssige Verbindung zwischen jedem Werkstück und dem Verbindungskörper zu bilden, wobei der Bearbeitungskopf eine Vorbehandlungseinrichtung umfasst, wobei die Vorbehandlungseinrichtung derart ausgebildet ist, dass ein Laserstrahl erzeugbar und zu dem Nahtbereich leitbar ist, wobei der Laserstrahl derart ausgebildet ist, dass Fasern des Werkstücks aufgrund dessen Bestrahlung mit dem Laserstrahl freilegbar sind; und/oder wobei die Vorbehandlungseinrichtung derart ausgebildet ist, dass eine mikrostrukturierte Funktionsschicht auf dem Werkstück erzeugbar ist, wobei der Bearbeitungskopf eine Gegenanpresseinrichtung umfasst, die ausgebildet ist, das Werkstück zu erfassen und in Richtung auf die Anpresseinrichtung zu pressen, wobei die Gegenanpresseinrichtung sich unterhalb und zwischen den Werkstücken erstreckt.

Es ist bevorzugt, dass die Gegenanpresseinrichtung entfernbar ausgebildet ist, um beim Einlegen einer zweiten oder weiteren Verbindungskörperlage den Verbindungskörper lediglich mittels der Anpresseinrichtung gegen das Werkstück, insbesondere gegen eine der Verbindungskörperlage entsprechende Werkstücklage, zu pressen.

Es ist bevorzugt, dass die Aktivierungseinrichtung ausgebildet ist, den Verbindungskörper an einer, insbesondere einer einzelnen, Verbindungskörperbreitseite zu erwärmen.

Es ist bevorzugt, dass die Gegenanpresseinrichtung ausgebildet ist, eine unterste Werkstücklage zu erfassen und in Richtung auf die Anpresseinrichtung zu pressen.

Es ist bevorzugt, dass die Anpresseinrichtung angeordnet ist, den Verbindungskörper auf einer dem Werkstück abgewandten Verbindungskörperbreitseite zu erfassen.

Es ist bevorzugt, dass die Gegenanpresseinrichtung ein Schwert aufweist, das zwischen die Werkstücke einführbar ist.

Es ist bevorzugt, dass die Gegenanpresseinrichtung eine Gegenanpressrolle aufweist, die gegenüber der Anpresseinrichtung, insbesondere an einem Endbereich des Schwerts, angeordnet ist

Vorzugsweise umfass der Bearbeitungskopf eine Füllstoffzuführungseinrichtung, die ausgebildet ist, Füllstoff dem Nahtbereich, insbesondere einem Fertigungsspalt, zuzuführen, damit beim Einlegen und Erwärmen einer ersten Verbindungskörperlage der Nahtbereich teilweise mittels Füllstoff verfüllbar ist.

Es ist bevorzugt, dass die Aktivierungseinrichtung eine Lasereinrichtung umfasst, die ausgebildet ist, einen Laserstrahl zum Erwärmen zu erzeugen und zu dem Nahtbereich zu leiten.

Es ist bevorzugt, dass die Lasereinrichtung ein Scannermodul umfasst, das zum Scannen des Laserstrahls über den Nahtbereich ausgebildet ist.

Die Erfindung schafft ferner eine Fertigungsmaschine, die ausgebildet ist, ein bevorzugtes Verfahren durchzuführen, und die einen bevorzugten Bearbeitungskopf umfasst.

Vorzugsweise umfasst die Fertigungsmaschine eine Werkstückpositioniereinrichtung, die ausgebildet ist, Werkstücke derart zu positionieren, dass ein Fertigungsspalt zwischen den Werkstücken, insbesondere den untersten Werkstücklagen der Werkstücke, erzeugbar ist.

Es ist bevorzugt, dass die Schäftungseinrichtung den Schäftungsbereich derart ausbildet, dass nach Positionierung die Breite des Nahtbereichs in Richtung senkrecht zu den Werkstücklagen, insbesondere stufenweise und/oder stets, zunimmt.

Es ist bevorzugt, dass der Abstand entlang der Parallelrichtung zu den Werkstücklagen zwischen den Werkstücken in Richtung senkrecht zu den Werkstücklagen betrachtet, insbesondere stufenweise und/oder stets, zunimmt.

Es ist bevorzugt, dass der Abstand entlang der Parallelrichtung zu den Werkstücklagen zwischen den untersten Werkstücklagen der geringste Abstand zwischen den Werkstücken ist.

Es ist bevorzugt, dass der Fertigungsspalt der geringste Abstand zwischen den Werkstücken entlang der Parallelrichtung zu den Werkstücklagen ist.

Die Erfindung wurde innerhalb des Projekts ''NEW2025 Multifunctional Fuselage" der TP194 ''Typical and Lower Centre Fuselage" gemacht. Neben der Nase und dem Rumpf ist das Projekt auf Zukunftstechnologien für die typische Anwendung in Rumpfkomponenten gerichtet, einschließlich Systemintegration und Fügungskonzepten.

Die Erfindung kann auch bei irgendeiner Naht aus thermoplastischem kohlefaserverstärktem Kunststoff (engl. carbon fibre reinforced plastic, kurz: CFRP) oder thermoplastisch beschichtetem Metall und ebenso bei Faser-Metall-Laminat (FML) Teilen oder Platten verwendet werden. Die geeignetste Anwendung ist voraussichtlich beim Fügen von Rumpfhüllen und -komponenten, beispielsweise Längsnähten auf der Ebene größerer Komponentenfertigung, etwa Rumpfsegmente, und Umfangsnähten auf der Ebene der Endfertigung, etwa zur Verbindung der Rumpfsegmente.

Im Unterschied zu den bekannten Methoden ergreift die Erfindung die Gelegenheit, die Fügeflächen direkt zu erwärmen, indem eines der Fügeteile angehoben werden kann. Vergleichbar mit dem an sich bekannten AFPT-Prozess, wird der Laser in eine Öffnungslücke geleitet, um lokal die Oberfläche auf Schmelztemperatur zu erwärmen. Damit kann ein Schmelzen von Harz in dem gesamten Abschnitt vermieden werden, indem die Schmelzzone auf die Fügeflächen reduziert wird. Während CFRP Materialien demgegenüber nicht einem Transmissionslaserschweißverfahren zugänglich sind, ermöglicht die Erfindung die Anwendung von Laserschweißverfahren auf CFRP. Im Unterschied zum AFPT-Prozess, der einzelne Lagen legt, macht sich die Erfindung einen Satz von Lagen zu Nutze, der ausreichend biegbar ist, um eine Lücke für den Laser zu lassen.

Die Erfindung nutzt die Schweißbarkeit thermoplastischer CFRP Materialien, die innerhalb des Projekts ausgewählt wurden. Die Erfindung vermeidet CFRP Staub im Komponentenbau und der Endmontage und erlaubt daher einen kosteneffizienten Zusammenbau vorausgestatteter Rumpfhüllen und -abschnitte. Die Erfindung kombiniert existierende Technologien, wie etwa Laserstrahlschweißen und thermoplastisches Schaftfügen mit industrialisierten automatisierten Anwendungen, die aus fortdauernden Projekten von IWS und Airbus abgeleitet wurden. Das sogenannte MuVaX-Konzept wird für integrierte Nahtvorbereitung und Fügen metallischer Strukturen durch Reibrührschweißen für die Endfertigung dahingehend weiterentwickelt, dass lediglich eine Seite zugänglich ist.

Das hier vorgeschlagene Verfahren ist inhärent robust in der Anwendung aufgrund der Verwendung eines Lasers zum lokalen Erwärmen der Schweißlinie in Kombination mit der Temperatursteuerung der Oberflächen mittels Wärmekameras während des Fügeprozesses. Im Unterschied sind sowohl Transmissionslaserschweißen als auch Induktionsschweißen auf vordefinierte Prozessparameter angewiesen, um die eigentliche Schmelztemperatur in der Schweißlinie vorherzusagen. Die Schmelztemperatur ist jedoch eine Schlüsselparameter des Prozesses für die Qualität der Verbindung. Induktionsschweißen ist daher weniger robust bei der Anwendung und kann nicht unbedingt unerkannte Prozessparameter kompensieren, wie etwa lokale Änderungen in der Schichtdicke. Ferner kann die Erfindung genutzt werden, um andere Materialrumpfkonzepte, wie das Metallwaffelplattendesign, FML-Strukturen oder jede andere Kombination mit thermoplastischer Beschichtung oder Matrix, zu fügen.

Eine wichtige Idee ist das Laserschweißen longitudinaler thermoplastischer Verbindungen im Komponentenbau. Das erlaubt das Fügen/Verbinden von Rumpfhüllen auf industrieller Skala. Es ist inhärent robust und flexibel in der Anwendung unter anderem wegen der Fähigkeit die Oberflächentemperatur der Fügefläche und den Abkühlprozess mittels Wärmekameras zu steuern. Da die geschäftete Geometrie tangentiale Toleranzen aufnehmen kann, erlaubt die Idee eine Akkumulation geometrischer Toleranzen auf Teileebene oder beim Positionieren der Rumpfhülle. Da die Naht nicht auf der gesamten Dicke durcherwärmt wird, kann die Wahrscheinlichkeit für Verzerrungen oder eingebaute Verspannungen in der Endnaht gesenkt werden.

Der technische Aufbau ist ähnlich zu AFPT, verwendet allerdings Bänder aus mehrschichtigem CFRP-Material unterschiedlicher Materialorientierung. Die Vorkommissionierung der Bänder auf großen Rollen anstelle einzelner Streifen kann die Geschwindigkeit des Prozesses erhöhen und ermöglicht erlaubt den Einsatz einfacher Stütz- und Presswerkzeuge, um die Verbindung zu schließen und den Bildungsprozess während des Abkühlprozesses zu steuern. Das MuVaX-System kann angepasst werden, den Laser und das Bandmaterial aufzunehmen, um die Naht auf Komponentenbauebene zu schweißen. Wärmekameras werden verwendet, um das Laserheizen und die Materialtemperatur in der Umgebung zu beobachten, um den Abkühlungsprozess zu steuern. Der industrielle Aufbau ist geeignet zum Schweißen thermoplastischer Verbindungen von Hybridstrukturen, wie etwa **FML** oder Waffelplattendesings und könnte auch außerhalb der Luftfahrtindustrie verwendet werden.

Verfahrensschritte sind insbesondere:
1) Vorbereiten einer geschäfteten Naht durch angepasstes Faserlegen, Laserablation oder maschinelle Bearbeitung;
2) Oberflächenstrukturierung / -aktivierung durch Laser und/oder Plasma zur Erhöhung der Verbindungsstärke;
3) Fixieren, Kantenvorbereitung und Positionierung mittels MuVaX-Konzept für die Endfertigung
4) Laserschweißen der ersten Lage mit Anpressrolle und unterstützender Gegendruckrolle, Lückenfüllen mit thermoplastischem Fülldraht mittels der Laserbandschweißeinheit des MuVaX-Systems
5) Laserschweißen der zweiten bis n-ten Lage mittels Laserschweißen

Ausführungsbeispiele werden anhand der beigefügten schematischen Zeichnungen näher erläutert. Darin zeigt:
- Fig. 1: ein Ausführungsbeispiel einer Fertigungsmaschine;
- Fig. 2: ein Ausführungsbeispiel eines Bearbeitungskopfes;
- Fig. 3: eine detaillierte Ansicht eines Teils des Bearbeitungskopfes aus Fig. 3;
- Fig. 4: eine Querschnittsansicht eines Nahtbereichs;
- Fig. 5: eine Perspektivansicht eines Nahtbereichs;
- Fig. 6: eine Ansicht eines vorbehandelten Schäftungsbereichs;
- Fig. 7: ein Ausführungsbeispiel einer Vorbehandlungseinrichtung; und
- Fig. 8: ein Ausführungsbeispiel einer Funktionsschicht.

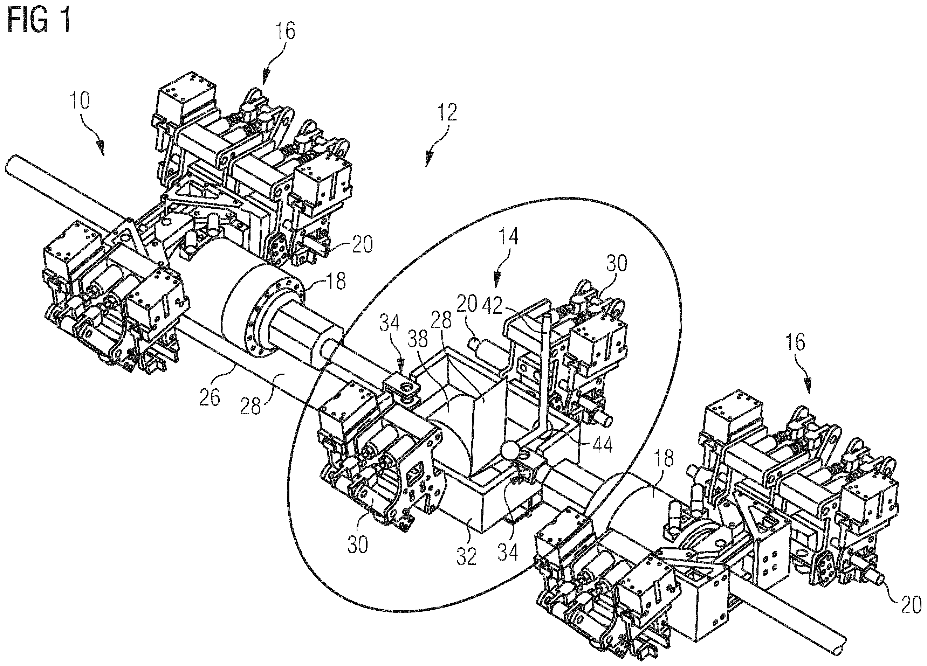

Es wird zunächst auf die Fig. 1 Bezug genommen, die eine Teilansicht einer Fertigungsmaschine 10 zeigt. Die Fertigungsmaschine 10 erstreckt sich entlang einer Längsrichtung, die auch als Fertigungsrichtung bezeichnet werden kann.

Die Fertigungsmaschine 10 umfasst eine Werkzeugtransporteinrichtung 12, die zum Transportieren unterschiedlicher Bearbeitungsköpfe 14 ausgebildet ist. Die Werkzeugtransporteinrichtung 12 weist zwei Werkzeugtransporteinheiten 16 auf, die entlang der Fertigungsrichtung beabstandet sind. Der Bearbeitungskopf 14 ist zwischen den beiden Werkzeugtransporteinheiten 16 angeordnet.

Die Werkzeugtransporteinheiten 16 bewegen sich mittels pneumatischer oder hydraulischer Zylinder 18 entlang der Fertigungsrichtung. Dabei bewegen sich die Werkzeugtransporteinheiten 16 diskontinuierlich, während sich der Bearbeitungskopf 14 kontinuierlich bewegt. Die Werkzeugtransporteinheiten 16 weisen quer zur Fertigungsrichtung beabstandete Führungseinrichtungen 20 auf, die mittels Führungsrollen 22 auf Führungsschienen 24 geführt werden. Die Führungsschienen 24 sind zwecks Übersichtlichkeit lediglich teilweise dargestellt.

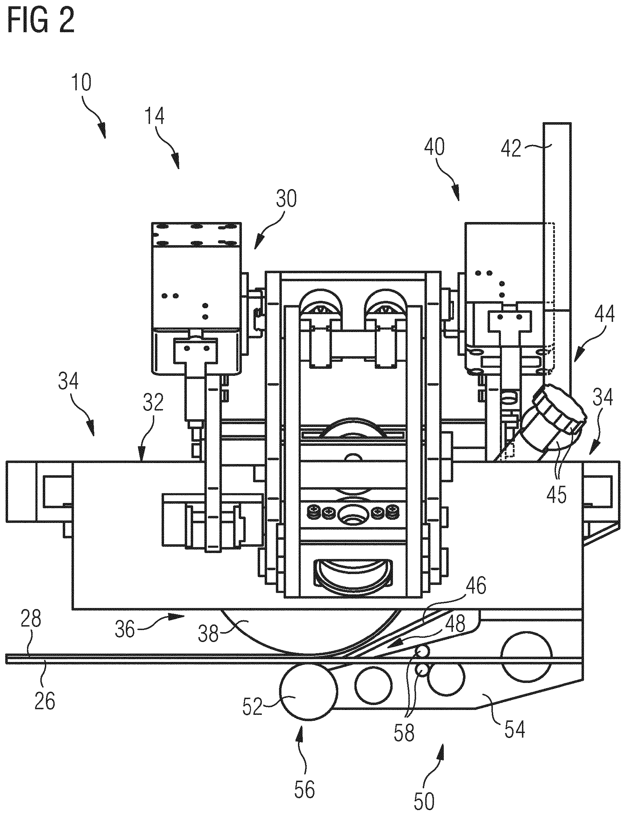

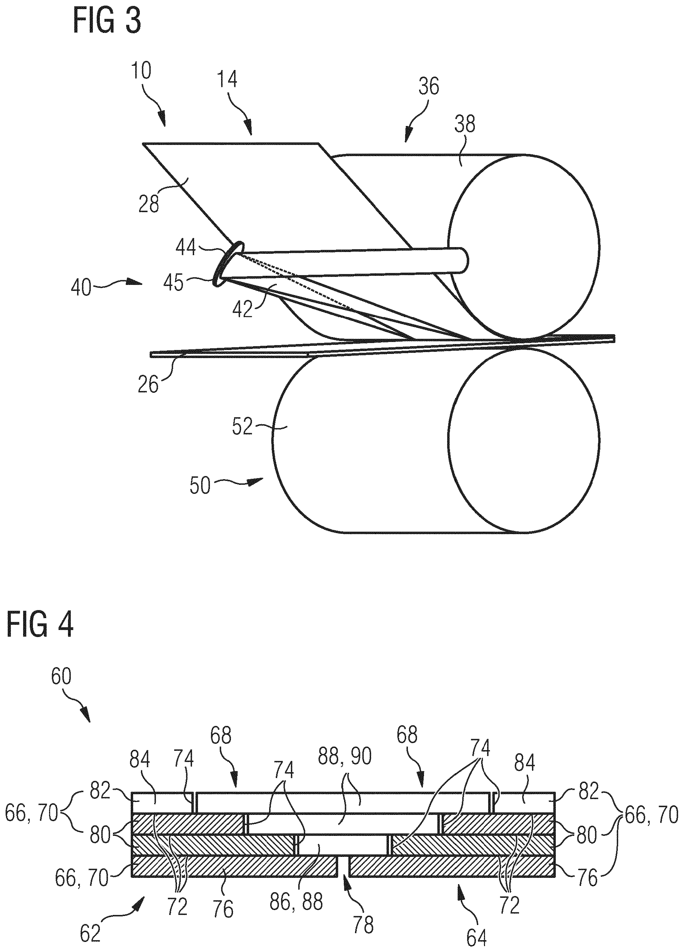

Ein Ausführungsbeispiel des Bearbeitungskopfes 14 ist näher in Fig. 2 und Fig. 3 dargestellt. Der Bearbeitungskopf 14 ist ausgebildet thermoplastische Werkstücke 26 mittels eines Verbindungskörpers 28 miteinander zu verbinden.

Der Bearbeitungskopf 14 umfasst eine Bearbeitungskopfführungseinrichtung 30 zum Führen des Bearbeitungskopfes 14 entlang der Fertigungsrichtung, die in Fig. 2 von links nach rechts verläuft.

Der Bearbeitungskopf 14 umfasst einen Stützrahmen 32, der Befestigungsbereiche für unterschiedliche Komponenten des Bearbeitungskopfes 14 bereitstellt. Der Stützrahmen 32 weist ein Paar von Zylinderkupplungen 34 auf, mittels derer der Bearbeitungskopf 14 an die Zylinder 18 angeschlossen werden kann.

Der Bearbeitungskopf 14 umfasst ferner eine Anpresseinrichtung 36 mit wenigstens einer Anpressrolle 38, die den Verbindungskörper 28 an wenigstens eines der Werkstücke 26 anpressen kann, um diese stoffschlüssig miteinander zu verbinden.

Zum Verbinden kann der Bearbeitungskopf 14 ferner eine Lasereinrichtung 40 umfassen, die einen Laserstrahl 42 mittels eines Scannermoduls 44 auf die Werkstücke 26 und den Verbindungskörper 28 leiten kann. Das Scannermodul 44 umfasst wenigstens einen aktorisch bewegbaren Scannerspiegel 45.

Der Bearbeitungskopf 14 hat zudem eine Füllstoffzuführungseinrichtung 46, die ausgebildet ist, einen Füllstoff 48, beispielsweise thermoplastisches Harz bzw. thermoplastischen Kunststoff, zuzuführen.

Der Bearbeitungskopf 14 kann eine Gegenanpresseinrichtung 50 aufweisen, die lösbar vorgesehen ist. Die Gegenanpresseinrichtung 50 weist bevorzugt eine Gegenanpressrolle 52 auf. Die Gegenanpressrolle 52 kann im Durchmesser kleiner als die Anpressrolle 38 ausgebildet sein.

Ferner kann die Gegenanpresseinrichtung 50 ein Schwert 54 umfassen, das sich zwischen den Werkstücken 26 hindurch erstreckt und an dessen Endbereich 56 die Gegenanpressrolle 52 angeordnet ist.

An dem Schwert 54 kann wenigstens ein Paar Schwertführungsrollen 58 angeordnet sein, das die Bewegung des Schwertes 54 durch die Werkstücke 26 hindurch verbessern kann.

Die Anpresseinrichtung 36 und die Gegenanpresseinrichtung 50 definieren zwischen sich eine Lücke für die Werkstücke 26 und den Verbindungskörper 28, sodass diese gepresst werden können.

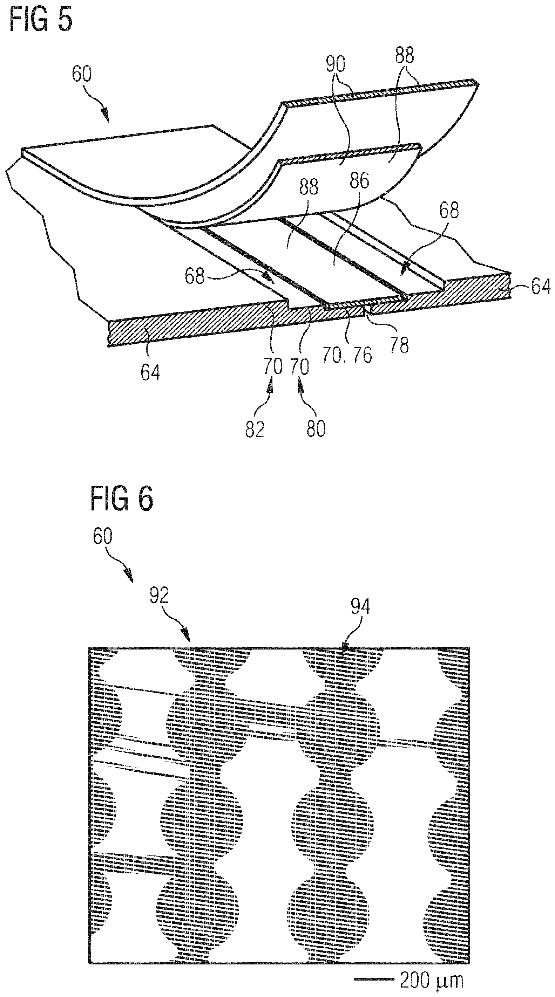

Nachfolgend wird auf Fig. 4 und Fig. 5 Bezug genommen, die einen Nahtbereich 60 zeigen. Ein erstes Werkstück 62 und ein zweites Werkstück 64 umfassen eine Mehrzahl an Werkstücklagen 66.

Die Werkstücklagen 66 sind so ausgebildet, beispielsweise bereits bei der Herstellung oder auch durch Materialbearbeitung nach Herstellung, dass jedes Werkstück 62, 64 einen Schäftungsbereich 68 aufweist.

Jedes Werkstück 62, 64 umfasst eine Mehrzahl von Werkstücklagen 70. Die Werkstücklagen 70 werden jeweils mit einer Werkstücklagenbreitseite 72 aufeinander gelegt, sodass eine Werkstücklagenschmalseite 74 des einen Werkstücks 62, 64 jeweils einer Werkstücklagenschmalseite 74 des anderen Werkstücks 64, 62 zugewandt ist.

Dabei können unterste Werkstücklagen 76, welche die unterseitige Oberfläche der Werkstücke 62, 64 bilden, einen Fertigungsspalt 78 für das Schwert 54 der Gegenanpresseinrichtung 50 bilden. Der Fertigungsspalt 78 ist deutlich schmäler als der Abstand der Werkstücklagenschmalseiten 74.

An die unterste Werkstücklage 76 können sich mehrere Werkstückzwischenlagen 80 anschließen, die wiederum jeweils mit ihrer Werkstücklagenbreitseite 72 aufeinander liegen.

Ferner können oberste Werkstücklagen 82 vorgesehen sein, welche die oberseitige Oberfläche der Werkstücke 62, 64 bilden.

Im vorliegenden Beispiel sind die untersten Werkstücklagen 76 und die Werkstückzwischenlagen 80 aus faserverstärktem Kunststoffmaterial gebildet, während die oberste Werkstücklage 82 aus einem Metallblech 84 gebildet ist. Man spricht in diesem Zusammenhang auch von Faser-Metall-Laminaten, kurz: FML.

Es sollte beachtet werden, dass hier jegliche Kombination denkbar ist und dass diese hauptsächlich vom gewünschten Anwendungsbereich abhängt.

Zum Verbinden der Werkstücke 62, 64 wird nun wie folgt vorgegangen. Ein bandförmiger erster Verbindungskörper 86, der beispielsweise als Verbindungsband 88 auf Rollen geliefert werden und ebenfalls aus faserverstärktem Kunststoff gebildet sein kann, wird in den durch die jeweiligen Schäftungsbereiche 68 und gegebenenfalls den Fertigungsspalt 78 begrenzten Nahtbereich 60 eingelegt, nachdem sowohl der erste Verbindungskörper 86 als auch beide Werkstücke 62, 64 durch den Laserstrahl 42 derart erwärmt wurden, dass anschließend unter Zuhilfenahme der Anpresseinrichtung 36 und der Gegenanpresseinrichtung 50 eine stoffschlüssige Verbindung zwischen dem ersten Verbindungskörper 86 und den Werkstücken 62, 64 erfolgt. Im selben zeitlichen Rahmen kann der von der Füllstoffzuführungseinrichtung 46 in den Nahtbereich 60 zugeführte Füllstoff 48 den Fertigungsspalt 78 vollständig verschließen. In beiden Vorgängen wird der Laserstrahl 42 mittels der Scannermoduls 44 über die gesamte Breite des Nahtbereichs 60 gescannt und so lokal Wärme eingebracht. Dabei Schmelzen lediglich die Oberflächen der Werkstücke 62, 64 und des ersten Verbindungskörpers 86, so dass ein übermäßiges Erwärmen der anderen Bereiche dieser Bauteile verhindert werden kann.

In einem weiteren Arbeitsgang, wird zunächst die Gegenanpresseinrichtung 50 entfernt und anschließend der Vorgang mit weiteren Verbindungskörpern 90 solange wiederholt, bis der gesamte Nahtbereich 60 bündig abgeschlossen ist.

Nachfolgend wird noch auf Fig. 6 bis Fig. 8 Bezug genommen, die Maßnahmen zur Verbesserung der stoffschlüssigen Verbindung zeigen, indem die Festigkeit der Verbindung gesteigert werden kann.

In Fig. 6 ist ein vergrößerter Ausschnitt eines Schäftungsbereichs 92 gezeigt, der mittels einer Laserbehandlung vorbehandelt wurde. Die Parameter des Laserstrahls wurden dabei so gewählt, dass die Fasern des Schäftungsbereichs 92 durch Ablation des Matrixmaterials zerstörungsfrei freigelegt wurden. Mit dieser Maßnahme kann eine reproduzierbare konsistente Oberflächenstruktur 94 geschaffen werden. Ferner ist eine lokale Behandlung des Schäftungsbereichs 92 möglich, so dass dieser Vorgang in den bisherigen Ablauf einfach integriert werden kann. Zudem können aufwendige Badverfahren vermieden werden. Versuche der Anmelderinnen haben gezeigt, dass die Festigkeit der stoffschlüssigen Verbindung mit dieser Oberflächenstrukturierung gesteigert werden kann.

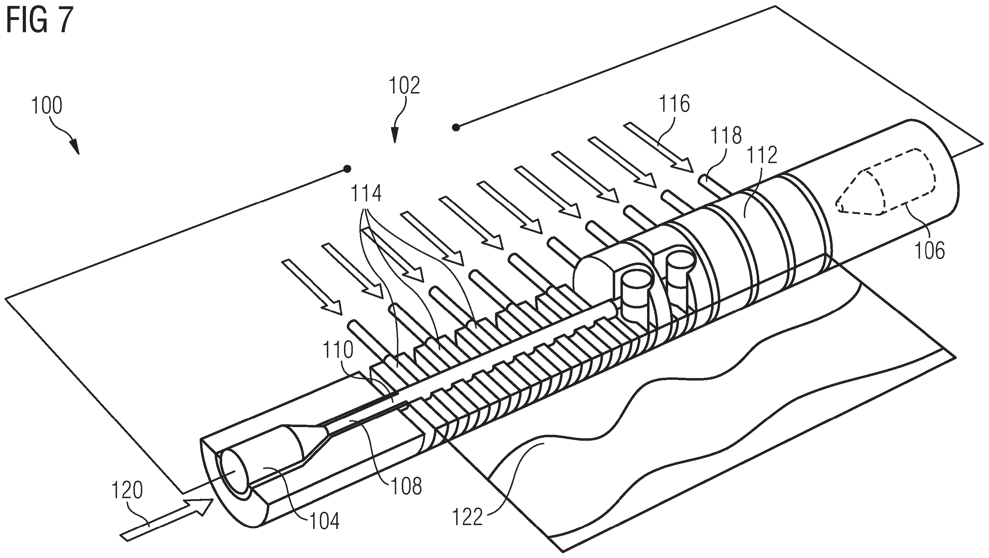

**In** Fig. 7 ist eine Plasmaquelle 100 zum Plasmabeschichten dargestellt. Plasmaquellen sind als solches bekannt. Die Plasmaquelle 100 ist an eine Energieversorgung 102 angeschlossen, die einer Kathode 104 und einer Anode 106 elektrische Energie zuführt um zwischen diesen einen Lichtbogen 108 zu bilden. Die zylinderförmig ausgebildete Lichtbogenkammer 110 weist eine Mehrzahl Kaskadenplatten 112, die jeweils eine Plasmakammer 114 enthalten. Ein Plasmagas 116 wird über eine Mehrzahl von Plasmagasanschlüssen 118 zugeführt. Ferner wird in die Lichtbogenkammer 110 ein inertes Gas 120 eingebracht. Durch eine geeignete Auslassgeometrie entsteht ein im Wesentlichen rechteckiger gleichmäßiger Plasmajet 122 zur Plasmabeschichtung eines Schäftungsbereichs.

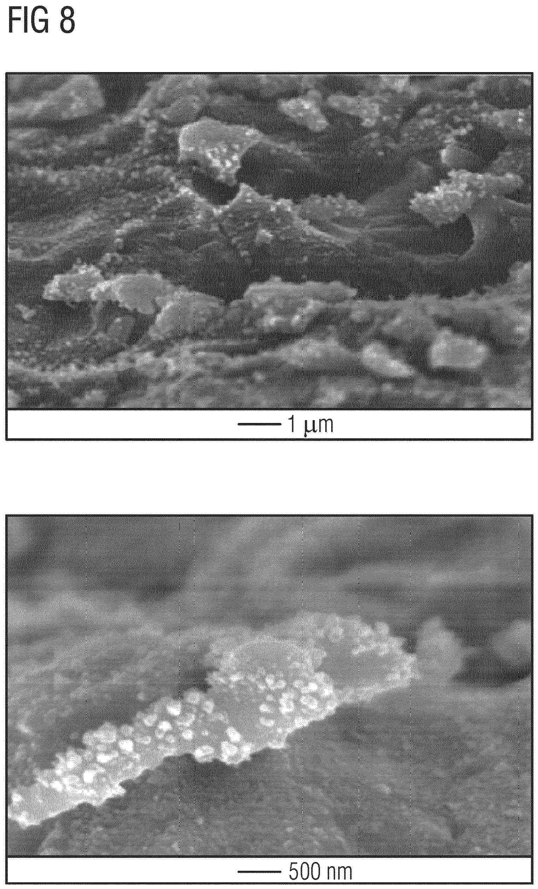

**In** Fig. 8, oben und unten ist in unterschiedlichen Vergrößerungen eine mikrostrukturierte Funktionsschicht dargestellt, die das Ergebnis der Plasmabeschichtung ist. Durch die mikrostrukturierte fraktale Geometrie weist der Schäftungsbereich eine höhere effektive Oberfläche auf, als ein unbehandelter Schäftungsbereich. Versuche der Anmelderinnen haben auch hier ergeben, dass damit die Festigkeit der Verbindung gesteigert werden kann.

Mit den hierin beschriebenen Ideen kann der Anwendungsbereich von Laserschweißverfahren auf komplexe Systeme aus faserverstärkten Kunststoffmaterialen bzw. Werkstücken ausgedehnt werden ohne dass transparente Bereiche erforderlich sind oder ein übermäßig hoher Anteil des Bauteils mit Wärme durchsetzt werden muss. Insgesamt lassen sich damit Verbindungen zwischen Faserverbundbauteilen einfacher und robuster herstellen.

### Bezugszeichenliste:

- 10: Fertigungsmaschine
- 12: Werkzeugtransporteinrichtung
- 14: Bearbeitungskopf
- 16: Werkzeugtransporteinheit
- 18: Zylinder
- 20: Führungseinrichtung
- 22: Führungsrolle
- 26: Werkstück
- 28: Verbindungskörper
- 30: Bearbeitungskopfführungseinrichtung
- 32: Stützrahmen
- 34: Zylinderkupplungen
- 36: Anpresseinrichtung
- 38: Anpressrolle
- 40: Lasereinrichtung
- 42: Laserstrahl
- 44: Scannermodul
- 45: Scannerspiegel
- 46: Füllstoffzuführungseinrichtung
- 48: Füllstoff
- 50: Gegenanpresseinrichtung
- 52: Gegenanpressrolle
- 54: Schwert
- 56: Endbereich
- 58: Schwertführungsrolle
- 60: Nahtbereich
- 62: erstes Werkstück
- 64: zweites Werkstück
- 66: Werkstücklage
- 68: Schäftungsbereich
- 70: Werkstücklage
- 72: Werkstücklagenbreitseite
- 74: Werkstücklagenschmalseite
- 76: unterste Werkstücklage
- 78: Fertigungsspalt
- 80: Werkstückzwischenlagen
- 82: oberste Werkstücklage
- 84: Metallblech
- 86: erster Verbindungskörper
- 88: Verbindungsband
- 90: weitere Verbindungskörper
- 92: Schäftungsbereich
- 94: Oberflächenstruktur
- 100: Plasmaquelle
- 102: Energieversorgung
- 104: Kathode
- 106: Anode
- 108: Lichtbogen
- 110: Lichtbogenkammer
- 112: Kaskadenplatte
- 114: Plasmakammer
- 116: Plasmagas
- 118: Plasmagasanschlüssen
- 120: inertes Gas
- 122: Plasmajet

## Patentansprüche

1. Fügeverfahren zum Verbinden von wenigstens zwei thermoplastischen Werkstücken (26, 62, 64), mit den Schritten:
a) Schäften eines Randbereichs an wenigstens einem der Werkstücke, um wenigstens einen Schäftungsbereich (68, 92) zu erzeugen, wobei der Schäftungsbereich (68, 92) durch eine Mehrzahl von Werkstücklagen (66, 70, 76, 80, 82) des Werkstücks (26, 62, 64) stufig ausgebildet wird, wobei der Schäftungsbereich (68, 92) vorbehandelt wird, indem Fasern des Werkstücks freigelegt werden und/oder indem das Werkstück (26, 62, 64) mit einer mikrostrukturierten Funktionsschicht beschichtet wird;
b) Positionieren der Werkstücke (26, 62, 64) relativ zueinander derart, dass der Schäftungsbereich (68, 92) des einen Werkstücks (26, 62, 64) und das andere Werkstück (26, 64, 62) einen Nahtbereich (60) begrenzen, wobei die Werkstücke (26, 62, 64) derart positioniert werden, dass ein Fertigungsspalt (78) zwischen den Werkstücken (26, 62, 64) oder den untersten Werkstücklagen (76) der Werkstücke (26, 62, 64) gebildet wird;
c) Einlegen eines Verbindungskörpers (28, 86, 90) in den Nahtbereich (60) und Erwärmen eines Teils des Verbindungskörpers (28, 86, 90) mittels lokalem Wärmeeintrag zum Bilden einer stoffschlüssigen Verbindung zwischen jedem Werkstück (26, 62, 64) und dem Verbindungskörper (28, 86, 90), wobei beim Einlegen einer ersten Verbindungskörperlage der Verbindungskörper (86) mittels einer Anpresseinrichtung (36), die den Verbindungskörper (86) erfasst, und einer Gegenanpresseinrichtung (50), die das Werkstück (26, 62, 64) erfasst, angepresst wird, wobei die Gegenanpresseinrichtung (50) sich unterhalb und zwischen den Werkstücken (26, 62, 64) erstreckt.

2. Fügeverfahren nach einem der vorhergehenden Ansprüche, **dadurch gekennzeichnet, dass** in Schritt a)
- das Schäften durch entsprechendes Faserlegen, Materialabtrag, Laserablation, Maschinenbearbeitung und/oder Fräsen erfolgt; und/oder
- der Schäftungsbereich (68, 92) vorbehandelt wird, indem Fasern des Werkstücks (26, 62, 64) mittels Laseroberflächenbehandlung freigelegt werden; und/oder
- der Schäftungsbereich (68, 92) vorbehandelt wird, indem das Werkstück (26, 62, 64) mit einer mikrostrukturierten Funktionsschicht plasmabeschichtet wird.

3. Fügeverfahren nach einem der vorhergehenden Ansprüche, **dadurch gekennzeichnet, dass** in Schritt b) die Werkstücke (26, 62, 64) derart positioniert werden, dass die Breite des Nahtbereichs (60) in Richtung senkrecht zu den Werkstücklagen (66, 70, 76, 80, 82) zunimmt oder stufenweise zunimmt.

4. Fügeverfahren nach einem der vorhergehenden Ansprüche, **dadurch gekennzeichnet, dass** in Schritt c) der Verbindungskörper (28, 86, 90) mittels einer Anpresseinrichtung (36) gegen das Werkstück (28, 86, 90) gepresst wird.

5. Fügeverfahren nach Anspruch 4, **dadurch gekennzeichnet, dass** die Anpresseinrichtung (36) den Verbindungskörper (28, 86, 90) auf einer dem Werkstück (28, 86, 90) abgewandten Verbindungskörperbreitseite erfasst.

6. Fügeverfahren nach einem der vorhergehenden Ansprüche, **dadurch gekennzeichnet, dass** in Schritt c) der Verbindungskörper (28, 86, 90) an einer Verbindungskörperbreitseite erwärmt wird.

7. Fügeverfahren nach einem der vorhergehenden Ansprüche, **dadurch gekennzeichnet, dass** in Schritt c) eine Mehrzahl von Verbindungskörpern (28, 86, 90) lagenweise eingelegt und erwärmt werden, um eine mit der jeweiligen Werkstücklage (66, 70, 76, 80, 82) stoffschlüssig verbundene Verbindungskörperlage zu erzeugen.

8. Fügeverfahren nach einem der vorhergehenden Ansprüche, **dadurch gekennzeichnet, dass** in Schritt c) beim Einlegen einer ersten Verbindungskörperlage der Verbindungskörper (86) mittels der Gegenanpresseinrichtung (50), die die unterste Werkstücklage (76), erfasst, angepresst wird.

9. Fügeverfahren nach Anspruch 8, **dadurch gekennzeichnet, dass**
- die Gegenanpresseinrichtung (50) ein Schwert (64) aufweist, das zwischen die Werkstücke (26, 62, 64) eingeführt wird, wenn das Anpressen erfolgt; und/oder
- die Gegenanpresseinrichtung (50) eine Gegenanpressrolle (52) aufweist, die gegenüber der Anpresseinrichtung (36) angeordnet ist.

10. Fügeverfahren nach einem der vorhergehenden Ansprüche, **dadurch gekennzeichnet, dass** in Schritt c) beim Einlegen einer zweiten oder weiteren Verbindungskörperlage der Verbindungskörper (90) lediglich mittels einer Anpresseinrichtung (36), die den Verbindungskörper (90) erfasst, gegen das Werkstück (26, 62, 64) gepresst wird.

11. Fügeverfahren nach einem der vorhergehenden Ansprüche, **dadurch gekennzeichnet, dass** in Schritt c) das Erwärmen durch Scannen eines Laserstrahls (42) über den Nahtbereich (60) erfolgt.

12. Fügeverfahren nach einem der vorhergehenden Ansprüche, **dadurch gekennzeichnet, dass** der Fertigungsspalt (78) beim Einlegen und Erwärmen einer ersten Verbindungskörperlage (90) mittels Füllstoff (48) verfüllt wird.

13. Fügeverfahren nach einem der vorhergehenden Ansprüche, **dadurch gekennzeichnet, dass**
- der Verbindungskörper (28, 86, 90) als flexibles Verbindungsband ausgebildet ist; und/oder
- der Verbindungskörper (28, 86, 90) einen höchstens teilweise ausgehärteten faserverstärkten Kunststoff enthält oder daraus gefertigt ist; und/oder
- der Verbindungskörper (28, 86, 90) ein Metallblech (84) enthält oder daraus gefertigt ist; und/oder
- der Verbindungskörper (28, 86, 90) eine Faser-Metall-Lage enthält oder daraus gefertigt ist; und/oder
- der Verbindungskörper (28, 86, 90) einen mehrschichtigen faserverstärkten Kunststoff enthält oder daraus gefertigt ist; und/oder
- der faserverstärkte Kunststoff ein kohlefaserverstärkter Kunststoff und/oder ein glasfaserverstärkter Kunststoff ist.

14. Bearbeitungskopf (14) für eine Fertigungsmaschine (10), die zum Fertigen einer Rumpfkomponente für ein Rumpfsegment eines Luftfahrzeugs oder eines Rumpfsegments für ein Luftfahrzeug ausgebildet ist, wobei der Bearbeitungskopf (14) zum Verbinden von wenigstens zwei Werkstücken (26, 62, 64), die faserverstärkten Kunststoff enthalten oder daraus gefertigt sind, ausgebildet ist und eine Einlegeeinrichtung, die zum Einlegen eines Verbindungskörpers (28, 86, 90) in einen Nahtbereich (60) zwischen den Werkstücken (26, 62, 64) ausgebildet ist, eine Aktivierungseinrichtung, die zum Erwärmen des im Nahtbereich (60) befindlichen Teils des Verbindungskörpers (28, 86, 90) mittels lokalem Wärmeeintrag ausgebildet ist, und eine Anpresseinrichtung (36) umfasst, die zum Anpressen des erwärmten Verbindungskörpers (28, 86, 90) an das Werkstück (26, 62, 64) ausgebildet, um eine stoffschlüssige Verbindung zwischen jedem Werkstück (26, 62, 64) und dem Verbindungskörper (28, 86, 90) zu bilden **dadurch gekennzeichnet, dass** der Bearbeitungskopf (14) eine Vorbehandlungseinrichtung umfasst, wobei die Vorbehandlungseinrichtung derart ausgebildet ist, dass ein Laserstrahl (42) erzeugbar und zu dem Nahtbereich (60) leitbar ist, wobei der Laserstrahl (42) derart ausgebildet ist, dass Fasern des Werkstücks (26, 62, 64) aufgrund dessen Bestrahlung mit dem Laserstrahl (42) freilegbar sind; und/oder wobei die Vorbehandlungseinrichtung derart ausgebildet ist, dass eine mikrostrukturierte Funktionsschicht auf dem Werkstück erzeugbar ist, wobei der Bearbeitungskopf (14) eine Gegenanpresseinrichtung (50) umfasst, die ausgebildet ist, das Werkstück (26, 62, 64) zu erfassen und in Richtung auf die Anpresseinrichtung (36) zu pressen, wobei die Gegenanpresseinrichtung (50) sich unterhalb und zwischen den Werkstücken (26, 62, 64) erstreckt.

15. Fertigungsmaschine (10), die ausgebildet ist, ein Verfahren nach einem der Ansprüche 1 bis 13 durchzuführen, **gekennzeichnet durch** einen Bearbeitungskopf (14) nach Anspruch 14.

## Claims

1. Joining method for connecting at least two thermoplastic workpieces (26, 62, 64), with the steps of:
a) splicing an edge region on at least one of the workpieces in order to produce at least one splice region (68, 92), wherein the splice region (68, 92) is formed in a stepped manner by a plurality of workpiece layers (66, 70, 76, 80, 82) of the workpiece (26, 62, 64), wherein the splice region (68, 92) is pretreated by fibres of the workpiece being exposed, and/or by the workpiece (26, 62, 64) being coated with a microstructured functional layer;
b) positioning the workpieces (26, 62, 64) relative to one another in such a manner that the splice region (68, 92) of the one workpiece (26, 62, 64) and the other workpiece (26, 64, 62) bound a seam region (60), wherein the workpieces (26, 62, 64) are positioned in such a manner that a manufacturing gap (78) is formed between the workpieces (26, 62, 64) or the lowermost workpiece layers (76) of the workpieces (26, 62, 64);
c) inserting a connecting body (28, 86, 90) into the seam region (60) and heating part of the connecting body (28, 86, 90) by means of local input of heat in order to form an integrally bonded connection between each workpiece (26, 62, 64) and the connecting body (28, 86, 90), wherein, when a first connecting body layer is inserted, the connecting body (86) is pressed by means of a pressing device (36) which detects the connecting body (86), and a counter pressing device (50) which detects the workpiece (26, 62, 64), wherein the counter pressing device (50) extends below and between the workpieces (26, 62, 64).

2. Joining method according to one of the preceding claims, **characterized in that**, in step a)
- the splicing takes place by corresponding fibre placement, material abrasion, laser ablation, machining and/or milling; and/or
- the splice region (68, 92) is pretreated by fibres of the workpiece (26, 62, 64) being exposed by means of laser surface treatment; and/or
- the splice region (68, 92) is pretreated by the workpiece (26, 62, 64) being plasma-coated with a microstructured functional layer.

3. Joining method according to one of the preceding claims, **characterized in that**, in step b), the workpieces (26, 62, 64) are positioned in such a manner that the width of the seam region (60) increases or increases step by step in a direction perpendicular to the workpiece layers (66, 70, 76, 80, 82).

4. Joining method according to one of the preceding claims, **characterized in that**, in step c), the connecting body (28, 86, 90) is pressed against the workpiece (28, 86, 90) by means of a pressing device (36).

5. Joining method according to Claim **4, characterized in that** the pressing device (36) detects the connecting body (28, 86, 90) on a connecting body wide side facing away from the workpiece (28, 86, 90).

6. Joining method according to one of the preceding claims, **characterized in that**, in step c), the connecting body (28, 86, 90) is heated on a connecting body wide side.

7. Joining method according to one of the preceding claims, **characterized in that**, in step c), a plurality of connecting bodies (28, 86, 90) are inserted and heated layer by layer in order to produce a connecting body layer which is connected in an integrally bonded manner to the respective workpiece layer (66, 70, 76, 80, 82).

8. Joining method according to one of the preceding claims, **characterized in that**, in step c), when a first connecting body layer is inserted, the connecting body (86) is pressed by means of the counter pressing device (50) which detects the lowermost workpiece layer (76).

9. Joining method according to Claim 8, **characterized in that**
- the counter pressing device (50) has a blade (64) which is introduced between the workpieces (26, 62, 64) when the pressing takes place; and/or
- the counter pressing device (50) has a counter pressing roller (52) which is arranged opposite the pressing device (36).

10. Joining method according to one of the preceding claims, **characterized in that**, in step c), when a second or further connecting body layer is inserted, the connecting body (90) is pressed against the workpiece (26, 62, 64) only by means of a pressing device (36) which detects the connecting body (90).

11. Joining method according to one of the preceding claims, **characterized in that**, in step c), the heating takes place by scanning a laser beam (42) over the seam region (60).

12. Joining method according to one of the preceding claims, **characterized in that** the manufacturing gap (78) is filled by means of filling material (48) during the insertion and heating of a first connecting body layer (90).

13. Joining method according to one of the preceding claims, **characterized in that**
- the connecting body (28, 86, 90) is in the form of a flexible connecting strip; and/or
- the connecting body (28, 86, 90) contains an at most partially cured fibre reinforced plastic or is manufactured therefrom; and/or
- the connecting body (28, 86, 90) contains a metal sheet (84) or is manufactured therefrom; and/or
- the connecting body (28, 86, 90) contains a fibre metal layer or is manufactured therefrom; and/or
- the connecting body (28, 86, 90) contains a multilayered, fibre reinforced plastic or is manufactured therefrom; and/or
- the fibre reinforced plastic is a carbon fibre reinforced plastic and/or a glass fibre reinforced plastic.

14. Machining head (14) for a manufacturing machine (10) which is designed for manufacturing a fuselage component for a fuselage segment of an aircraft or a fuselage segment for an aircraft, wherein the machining head (14) is designed for connecting at least two workpieces (26, 62, 64) which contain fibre reinforced plastic or are manufactured therefrom, and comprises an insertion device which is designed for inserting a connecting body (28, 86, 90) into a seam region (60) between the workpieces (26, 62, 64), an activation device which is designed for heating that part of the connecting body (28, 86, 90) which is located in the seam region (60) by means of local heat input, and a pressing device (36) which is designed for pressing the heated connecting body (28, 86, 90) onto the workpiece (26, 62, 64) in order to form an integrally bonded connection between each workpiece (26, 62, 64) and the connecting body (28, 86, 90), **characterized in that** the machining head (14) comprises a pretreatment device, wherein the pretreatment device is designed in such a manner that a laser beam (42) can be produced and can be conducted to the seam region (60), wherein the laser beam (42) is designed in such a manner that fibres of the workpiece (26, 62, 64) can be exposed because of the irradiation thereof with the laser beam (42); and/or wherein the pretreatment device is designed in such a manner that a microstructured functional layer can be produced on the workpiece, wherein the machining head (14) comprises a counter pressing device (50) which is designed to detect the workpiece (26, 62, 64) and to press it in the direction of the pressing device (36), wherein the counter pressing device (50) extends below and between the workpieces (26, 62, 64).

15. Manufacturing machine (10), which is designed to carry out a method according to one of Claims 1 to 13, **characterized by** a machining head (14) according to Claim 14.

## Revendications

1. Procédé d'assemblage pour relier au moins deux pièces thermoplastiques (26, 62, 64), avec les étapes suivantes :
a) l'affûtage d'une zone de bord sur au moins l'une des pièces, afin de produire au moins une zone d'affûtage (68, 92), la zone d'affûtage (68, 92) étant réalisée en gradins par une pluralité de couches de pièce (66, 70, 76, 80, 82) de la pièce (26, 62, 64), la zone d'affûtage (68, 92) étant prétraitée en dégageant des fibres de la pièce et/ou en revêtant la pièce (26, 62, 64) d'une couche fonctionnelle microstructurée ;
b) le positionnement des pièces (26, 62, 64) l'une par rapport à l'autre de telle sorte que la zone d'affûtage (68, 92) d'une pièce (26, 62, 64) et l'autre pièce (26, 64, 62) délimitent une zone de joint (60), les pièces (26, 62, 64) étant positionnées de telle sorte qu'un interstice de fabrication (78) est formé entre les pièces (26, 62, 64) ou les couches de pièces les plus basses (76) des pièces (26, 62, 64) ;
c) la mise en place d'un corps de liaison (28, 86, 90) dans la zone de joint (60) et le chauffage d'une partie du corps de liaison (28, 86, 90) au moyen d'un apport de chaleur local pour former une liaison de matière entre chaque pièce (26, 62, 64) et le corps de liaison (28, 86, 90) ; lors de la mise en place d'une première couche de corps de liaison, le corps de liaison (86) étant pressé au moyen d'un dispositif de pression (36) qui saisit le corps de liaison (86) et d'un dispositif de contre-pression (50) qui saisit la pièce (26, 62, 64), le dispositif de contre-pression (50) s'étendant au-dessous des pièces (26, 62, 64) et entre celles-ci.

2. Procédé d'assemblage selon l'une quelconque des revendications précédentes, **caractérisé en ce qu'**à l'étape a)
- l'affûtage est effectué par une pose de fibres, un enlèvement de matière, une ablation au laser, un usinage et/ou un fraisage approprié ; et/ou
- la zone d'affûtage (68, 92) est prétraitée en dégageant des fibres de la pièce (26, 62, 64) au moyen d'un traitement de surface au laser ; et/ou
- la zone d'affûtage (68, 92) est prétraitée en revêtant par plasma la pièce (26, 62, 64) d'une couche fonctionnelle microstructurée.

3. Procédé d'assemblage selon l'une quelconque des revendications précédentes, **caractérisé en ce qu'**à l'étape b), les pièces (26, 62, 64) sont positionnées de telle sorte que la largeur de la zone de joint (60) augmente ou augmente progressivement dans la direction perpendiculaire aux couches de pièces (66, 70, 76, 80, 82).

4. Procédé d'assemblage selon l'une quelconque des revendications précédentes, **caractérisé en ce qu'**à l'étape c), le corps de liaison (28, 86, 90) est pressé contre la pièce (28, 86, 90) au moyen d'un dispositif de pression (36).

5. Procédé d'assemblage selon la revendication 4, **caractérisé en ce que** le dispositif de pression (36) saisit le corps de liaison (28, 86, 90) sur un côté large du corps de liaison détourné de la pièce (28, 86, 90).

6. Procédé d'assemblage selon l'une quelconque des revendications précédentes, **caractérisé en ce qu'**à l'étape c), le corps de liaison (28, 86, 90) est chauffé sur un côté large du corps de liaison.

7. Procédé d'assemblage selon l'une quelconque des revendications précédentes, **caractérisé en ce qu'**à l'étape c), une pluralité de corps de liaison (28, 86, 90) sont mis en place couche par couche et chauffés afin de produire une couche de corps de liaison reliée par liaison de matière à la couche de pièce respective (66, 70, 76, 80, 82).

8. Procédé d'assemblage selon l'une quelconque des revendications précédentes, **caractérisé en ce qu'**à l'étape c), lors de la mise en place d'une première couche de corps de liaison, le corps de liaison (86) est pressé au moyen du dispositif de contre-pression (50), qui saisit la couche de pièce la plus basse (76).

9. Procédé d'assemblage selon la revendication 8, **caractérisé en ce que**
- le dispositif de contre-pression (50) présente une lame (64) qui est insérée entre les pièces (26, 62, 64) lorsque la pression est effectuée ; et/ou
- le dispositif de contre-pression (50) comprend un rouleau de contre-pression (52) qui est agencé à l'opposé du dispositif de pression (36).

10. Procédé d'assemblage selon l'une quelconque des revendications précédentes, **caractérisé en ce qu'**à l'étape c), lors de la mise en place d'une deuxième couche ou d'une autre couche de corps de liaison, le corps de liaison (90) est pressé contre la pièce (26, 62, 64) uniquement au moyen d'un dispositif de pression (36) qui saisit le corps de liaison (90).

11. Procédé d'assemblage selon l'une quelconque des revendications précédentes, **caractérisé en ce qu'**à l'étape c), le chauffage est effectué par balayage d'un faisceau laser (42) sur la zone de joint (60).

12. Procédé d'assemblage selon l'une quelconque des revendications précédentes, **caractérisé en ce que** l'interstice de fabrication (78) est rempli au moyen d'un matériau de remplissage (48) lors de la mise en place et du chauffage d'une première couche de corps de liaison (90).

13. Procédé d'assemblage selon l'une quelconque des revendications précédentes, **caractérisé en ce que**
- le corps de liaison (28, 86, 90) est réalisé sous forme de bande de liaison flexible ; et/ou
- le corps de liaison (28, 86, 90) contient une matière plastique renforcée par des fibres, au plus partiellement durcie, ou est fabriqué à partir de celle-ci ; et/ou
- le corps de liaison (28, 86, 90) contient une feuille de métal (84) ou est fabriqué à partir de celle-ci ; et/ou
- le corps de liaison (28, 86, 90) contient une couche de fibre-métal ou est fabriqué à partir de celle-ci ; et/ou
- le corps de liaison (28, 86, 90) contient une matière plastique multicouche renforcée par des fibres ou est fabriqué à partir de celle-ci ; et/ou
- la matière plastique renforcée par des fibres est une matière plastique renforcée par des fibres de carbone et/ou une matière plastique renforcée par des fibres de verre.

14. Tête d'usinage (14) pour une machine de fabrication (10), qui est réalisée pour fabriquer un composant de fuselage pour un segment de fuselage d'un aéronef ou un segment de fuselage pour un aéronef, la tête d'usinage (14) étant réalisée pour relier au moins deux pièces (26, 62, 64) qui contiennent une matière plastique renforcée par des fibres ou qui sont fabriquées à partir de celle-ci, et comprenant un dispositif de mise en place qui est réalisé pour mettre en place un corps de liaison (28, 86, 90) dans une zone de joint (60) entre les pièces (26, 62, 64), un dispositif d'activation qui est réalisé pour chauffer la partie du corps de liaison (28, 86, 90) se trouvant dans la zone de joint (60) au moyen d'un apport de chaleur local, et un dispositif de pression (36) qui est réalisé pour presser le corps de liaison (28, 86, 90) chauffé contre la pièce (26, 62, 64) afin de former une liaison par matière entre chaque pièce (26, 62, 64) et le corps de liaison (28, 86, 90), **caractérisée en ce que** la tête d'usinage (14) comprend un dispositif de prétraitement, le dispositif de prétraitement étant réalisé de telle sorte qu'un faisceau laser (42) peut être produit et dirigé vers la zone de joint (60), le faisceau laser (42) étant réalisé de telle sorte que des fibres de la pièce (26, 62, 64) peuvent être dégagées en raison de son exposition au faisceau laser (42) ; et/ou le dispositif de prétraitement étant réalisé de telle sorte qu'une couche fonctionnelle microstructurée peut être produite sur la pièce, la tête d'usinage (14) comprenant un dispositif de contre-pression (50) qui est réalisé pour saisir la pièce (26, 62, 64) et la presser en direction du dispositif de pression (36), le dispositif de contre-pression (50) s'étendant au-dessous des pièces (26, 62, 64) et entre celles-ci.

15. Machine de fabrication (10), qui est réalisée pour mettre en œuvre un procédé selon l'une quelconque des revendications 1 à 13, **caractérisée par** une tête d'usinage (14) selon la revendication 14.
